(19) **Europäisches Patentamt / European Patent Office / Office européen des brevets**

(11) **EP 1 814 942 B1**

(12) **EUROPEAN PATENT SPECIFICATION**

(45) Date of publication and mention
of the grant of the patent:
**22.07.2009 Bulletin 2009/30**

(21) Application number: **05846330.8**

(22) Date of filing: **16.11.2005**

(51) Int Cl.:
***C08L 23/10*** (2006.01)     ***C08L 23/08*** (2006.01)

(86) International application number:
**PCT/US2005/041562**

(87) International publication number:
**WO 2006/055650 (26.05.2006 Gazette 2006/21)**

(54) **ELASTOMERIC COMPOSITIONS WITH IMPROVED RESISTANCE TO NECKING FOR HIGH SPEED SHEET EXTRUSION APPLICATIONS**

ELASTOMERE ZUSAMMENSETZUNGEN MIT ERHÖHTER EINSCHNÜRUNGSRESISTENZ FÜR HOCHGESCHWINDIGKEITS-BLECHEXTRUDIERUNGSANWENDUNGEN

COMPOSITIONS ELASTOMERES DE RESISTANCE AMELIOREE A LA STRICTION POUR APPLICATIONS D'EXTRUSION DE FEUILLE A GRANDE VITESSE

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.11.2004 US 628405 P**

(43) Date of publication of application:
**08.08.2007 Bulletin 2007/32**

(73) Proprietor: **DOW GLOBAL TECHNOLOGIES INC. Midland MI 48674 (US)**

(72) Inventor: **HECK, Henry, G.**
**Lake Jackson, TX 77566 (US)**

(74) Representative: **Hayes, Adrian Chetwynd et al Boult Wade Tennant, Verulam Gardens 70 Gray's Inn Road London WC1X 8BT (GB)**

(56) References cited:
**WO-A-96/16119         WO-A-20/04026955
US-A1- 2001 036 975    US-B1- 6 541 105**

**Description**

This application claims the benefit of U.S. Provisional Application No. 60/628,405, filed on November 16, 2004.

This invention relates to elastomeric compositions that can be formed into sheets using high speed extrusion processes, and to the sheets made from such compositions.

High speed sheet extrusion refers to extrusion at rates in excess of 1000 pounds per hour per die. This is becoming the preferred process for producing sheet or membrane for applications such as roofing or pond liners, wherein the sheet is welded in the field to create a continuous sheet of very large area. Many improvements have been made to lower overall cost. Sheet width has increased from 6 to 10 feet to decrease the number of welds required. On-line compounding has been implemented to mix polymers, antioxidants / weathering packages, and fire retardant additives to the composition, while forwarding the molten mix to the die. This saves pelletization and then re-melting and pumping the molten composition to the die, which would be required if compounding and sheet extrusion were separate steps. Multi-layer structures are prepared continuously by feeding a reinforcing scrim between two separate extrusion dies, and laminating the structure in the nip of the take-up rolls. This eliminates the need for reheating the layers to prepare for a separate lamination step. The combination of high production rates, very wide sheets, and complex structures, creates a necking problem in the extrusion process.

Heck et al. describe rheology modified thermoplastic elastomer (TPE) compositions in WO 98/32795. The rheology modification can be induced by various means including peroxides and radiation. The exemplified compositions are rheology modified using a peroxide alone. Modification results in improved melt strength, higher upper service temperature, faster set-up and greater shear thinning which allows higher output at lower back-pressure and torque.

Rheology modification however requires reactive extrusion which adds cost, if carried out separately from the compounding of the product used to prepare the sheet composition. In facilities that have installed in-line compounding, the rheology modification can be done at the same time the polymers are blended and the fire retardant and other special additives are compounded. Most operators however would prefer not to increase the complexity by doing reactive chemistry in the twin screw extruder. Applicant attempted to extrude a TPE composition of WO 98/32795 without the peroxide rheology modifier. As described below, thermoplastic polyolefin (TPO) compositions are disclosed as being useful for film and sheet applications. The result was a decrease in sheet width and an increase in thickness. Increasing the take-up rate reduced the thickness, but further reduced the width. The sheet produced without peroxide modification was no longer 10 feet wide, which was unacceptably narrow. By contrast, the rheology modified sheet had been 10 feet 4 inches wide. This allowed an inch and a half to be trimmed from either edge and still left a sheet 10 feet 1 inch wide. Turning off the peroxide had resulted in a 10 inch differential due to an increase in necking.

The use of thermoplastic polyolefin ("TPO") compositions has been disclosed for various applications. For example, U.S. Patents 5,688,866 and 5,856,406 and European Patent Application 1 072 643 A1 disclose TPO compositions for molded articles. U.S. Patent 5,576,374 discloses filled TPO compositions for molded articles.

The use of TPO compositions for films and sheets, such as membranes, skins and liners, also has been disclosed. Compositions that will impart certain properties to the ultimate film or sheet, such as tear resistance, tensile strength, flexibility and heat sealability, have been disclosed. For example, U.S. Patent 5,358,792 discloses heat sealable film compositions comprising an ethylene based copolymer and a propylene based polymer. The ethylene based copolymer has a density from 0.88 g/cc to 0.915 g/cc, a melt index of from 1.5 dg/min (or 1.5 g/10 min) to 7.5 dg/min (or 7.5 g/10 min), a molecular weight distribution ("MWD") no greater than 3.5 and a composition breadth index greater than 70 percent. The propylene based polymer has from 88 mole percent to 100 mole percent propylene and from 12 mole percent to 0 mole percent of an alpha-olefin other than propylene. U.S. Patent 6,207,754 discloses compositions having a 1percent secant modulus of less than 40,000 psi for use in flexible skins and liners. The compositions comprise (a) an impact-modified polypropylene resin comprising (i) $\geq$ 80 wt percent propylene polymer having $\geq$ 95 wt percent propylene and (ii) < 20 wt percent olefin copolymer elastomers and (b) plastomer resin comprising (i) 87-97.5 mol percent ethylene and (ii) 13-2.5 mol percent alpha-olefin. The impact-modified polypropylene resin has a melt flow rate of from 0.5 to 5.0. More recently, International Patent Application WO 03/033585 A1 discloses polymeric membrane compositions. The compositions comprise (a) 10-90 wt percent very low density polyethylene ("VLDPE"), produced using metallocene catalysts, and formed from > 50 mol percent ethylene units, and the remainder being $\alpha$-olefin comonomers, and (b) 90-10 wt percent PP homopolymers and copolymers. The VLDPE is characterized by a melt index of 0.5 - 20 g/10 min, as measured in accordance with ASTM-1238 condition E (2.16kg, 190°C). The compositions are said to be particularly suitable in membrane applications, where increased tear resistance and tensile strength are desirable.

U.S. Publication 2001/0036975 discloses macrocellular polyolefin foams for use in sound absorption and insulation applications. These foams are obtained by extruding a high melt strength (HMS) polypropylene resin (PP), or preferably a blend of a HMS PP resin and a free radical polymerized ethylene polymer, present in the blend in a weight ratio of at least 35:65, optionally another polymer such as a substantially random interpolymer. The document US 2002 004 2472 discloses ethylene polymer film resins.

International Publication WO 96/16119 discloses an ethylene polymer extrusion composition having high drawdown and substantially reduced neck-in. The ethylene polymer extrusion composition is made of 75-95 weight percent of at least one ethylene α-olefin interpolymer, and 5-25 weight percent of at least one high pressure ethylene polymer, characterized as having high melt strength and a broad, bimodal molecular weight distribution.

Some TPO compositions having properties suitable for a particular production method also have been disclosed. U.S. Patent 6,096,831 discloses an olefin resin composition having excellent thermoformability, and a sheet molded therefrom. The olefin resin composition comprises (a) 97-60 wt percent PP resin and (b) 3-40 wt percent ethylene ("PE") resin. The PP resin preferably has a melt flow rate of 0.3 to 20 g/10 min, as measured in accordance with JIS-D7210 (230°C, 2.16 kg load), and the PE resin preferably has a melt flow rate of 0.5 to 10 g/10 min, as measured in accordance with JIS-K7210, condition 4.

However, a high speed sheet extrusion process in which the die is some distance from the nip of the take-up rolls presents an additional challenge to producing a TPO sheet, particularly an elastomeric TPO sheet. TPO compositions neck, or decrease in width, in the distance between the die and the nip of the take-up rolls. Often the TPO composition has the properties suitable for the final sheet, but loses too much width in a high speed extrusion process to produce a sheet of acceptable width. With the reduced width, is the attendant deficiency of too great a thickness. Attempts to reduce the thickness by "drawing" the sheet, merely further reduce the sheet width. There remains a need for a necking resistant, elastomeric TPO sheet suitable for producing sheets in high speed extrusion processes.

Surprisingly, Applicant has discovered that elastomeric compositions, comprising a high melt strength polymer and a high flow polymer, can be extruded at very high line speeds with minimal necking to produce sheets.

One aspect of the invention is a composition comprising: (a) a high melt strength material, which comprises a first polymer selected from the group consisting of an elastomeric ethylene/α-olefin polymer and a polypropylene polymer, and where the high melt strength material has a dynamic complex viscosity greater than, or equal to, 175,000 Poise (17,500 Pa·s), measured at 1 radians per second and 190 degrees Centigrade, with parallel plate rheometry, and (b) a high flow material, comprising a second polymer selected from the group consisting of an elastomeric ethylene/α-olefin polymer and a polypropylene polymer, and where the high flow material has a ratio of η*/td of less than 2500, where η* is the dynamic complex viscosity and td is the tan delta, both measured at 1 radian per second at 190 degrees Centigrade; and provided, the first polymer and the second polymer are not both a polypropylene polymer. In a preferred embodiment, the high melt strength material is present in an amount greater than greater than, or equal to, 20 weight percent, preferably greater than, or equal to, 30 weight percent, more preferably greater than, or equal to, 40 weight percent, and even more preferably greater than, or equal to, 50 weight percent, based on the sum weight of the high melt strength material and the high flow material.

In another aspect of the invention, the high melt strength material and the high flow material each individually comprise an ethylene/α-olefin polymer. In a further aspect, each ethylene/α-olefin polymer, individually, has polymerized therein at least one α-olefin comonomer, and, optionally, a polyene or diene, and wherein the α-olefin contains from 3 to 20 carbon atoms. In another aspect, each α-olefin individually contains from 3 to 10 carbon atoms. In yet a further aspect, each ethylene/α-olefin polymer is, individually, a diene-modified polymer, and wherein the diene is selected from the group consisting of norbornadiene, dicyclopentadiene, 1,4-hexadiene, piperylene, 5-ethylidene-2-norbomene and mixtures thereof.

In another aspect of the invention, the high flow material is present in an amount less than, or equal to, 70 weight percent, preferably less than, or equal to, 60 weight percent, more preferably less than, or equal to, 50 weight percent, and even more preferably, less than, or equal to, 45 weight percent, based on the sum weight of the high melt strength material and the high flow material.

In yet another aspect, the high melt strength material is present in an amount greater than or equal to 50 weight percent, and the high flow material is present in an amount less than, or equal to, 50 weight percent, and where such weight percentages are based on the sum weight of the high melt strength material and the high flow material.

In another aspect of the invention, the first polymer has a melt index, I2, or melt flow rate, MFR, less than 0.4 dg/min. In yet another aspect of the invention, the second polymer has a melt index, I2, or melt flow rate, MFR, greater than 25 dg/min.

In another aspect of the invention, the first polymer has a melt index, 12, or melt flow rate, MFR, less than 0.5 dg/min; and the second polymer has a melt index, I2, or melt flow rate, MFR, greater than, or equal to, 20 dg/min. In yet another aspect of the invention, the first polymer has a melt index, I2, or melt flow rate, MFR, less than 0.4 dg/min; and the second polymer has a melt index, I2, or melt flow rate, MFR, greater than, or equal to, 25 dg/min In yet another aspect of the invention, the first polymer has a melt index, I2, or melt flow rate, MFR, less than 0.3' dg/min; and the second polymer has a melt index, I2, or melt flow rate, MFR, greater than, or equal to, 30 dg/min.

The invention also provides for compositions containing a combination of two or more embodiments as described herein.

Another aspect of the invention is a process for forming an elastomeric sheet at high speeds, with minimal necking, said process comprising extruding a composition, comprising a blend of: (a) a high melt strength material comprising a first polymer selected from the group consisting of an elastomeric ethylene/α-olefin polymer and a polypropylene polymer, and where the high melt strength material has a dynamic complex viscosity greater than, or equal to, 175,000 Poise (17,500 Pa·s), measured at 1 radians per second and 190 degrees Centigrade, with parallel plate rheometry, and (b) a high flow material comprising a second polymer selected from the group consisting of an elastomeric ethylene/α-olefin polymer and a polypropylene polymer, and where the high flow material has a ratio of η*/td of less than 2500, where η* is the dynamic complex viscosity and td is the tan delta, both measured at 1 radian per second at 190 degrees Centigrade; and provided the first polymer and the second polymer are not both a polypropylene polymer.

The invention also provides for processes for forming sheets from compositions containing a combination of two or more embodiments as described herein. The invention also provides for processes for forming sheets, said processes comprising a combination of two or more embodiments as described herein.

Another aspect of the invention is an elastomeric sheet comprising a blend, which comprises: (a) a high melt strength material comprising a first polymer selected from the group consisting of an elastomeric ethylene/α-olefin polymer and a polypropylene polymer, and where the high melt strength material has a dynamic complex viscosity greater than, or equal to, 175,000 Poise (17,500 Pa·s), measured at 1 radians per second and 190 degrees Centigrade, with parallel plate rheometry, and (b) a high flow material comprising a second polymer selected from the group consisting of an elastomeric ethylene/α-olefin polymer and a polypropylene polymer, and where the high flow material has a ratio of η*/td of less than 2500, where η* is the dynamic complex viscosity and td is the tan delta, both measured at 1 radian per second at 190 degrees Centigrade; and provided the first polymer and second polymer are not both a polypropylene polymer.

The invention also provides for sheets formed from compositions containing a combination of two or more embodiments as described herein. The invention also provides for sheets comprising a combination of two or more embodiments as described herein.

The invention also provides for foams and foam sheets, both formed from compositions of the invention. Such compositions may contain a combination of two or more embodiments as described herein. The invention also provides for foams and foam sheets, both comprising a combination of two or more embodiments as described herein.

The invention also provides for an article comprising at least one component, which comprises, or is formed from, a composition as described herein. The invention also provides for an article comprising at least one component, which comprises, or is formed from, a composition comprising a combination of two or more embodiments as described herein.

The necking resistant, elastomeric, extrusion compositions of the invention comprise a blend of a high melt strength material, which comprises a first polymer selected from the group consisting of an elastomeric ethylene/α-olefin polymer and a polypropylene polymer, and a high flow material, which comprises a second polymer selected from the group consisting of an elastomeric ethylene/α-olefin polymer and a polypropylene polymer.

The ethylene α-olefin polymers (also referred to as "EAO polymers" or "EAO") that are suitable for this invention include interpolymers and diene modified interpolymers. Illustrative polymers include ethylene/propylene (EP) copolymers, ethylene/butylene (B) copolymers, ethylene/octene (EO) copolymers and ethylene/propylene/diene modified (EPDM) interpolymers. More specific examples include ultra low density linear polyethylene (ULDPE) (for example, Attane™ made by The Dow Chemical Company), homogeneously branched, linear EAO polymers (for example Tafmer™ by Mitsui Petrochemicals Company Limited and Exact™ by Exxon Chemical Company), and homogeneously branched, substantially linear EAO polymers (for example the Affinity™ polymers available from The Dow Chemical Company and Engage® polymers available from The Dow Chemical Company. The more preferred EAO polymers are the homogeneously branched linear and substantially linear ethylene interpolymers, or copolymers, with a density (measured in accordance with ASTM D-792) from 0.85 to 0.92 g/cc, especially from 0.85 to 0.90 g/cc.

The term "linear ethylene/α-olefin polymers" represents polymers that have an absence of long chain branching, as for example the linear low density polyethylene polymers or linear high density polyethylene polymers made using uniform branching (that is, homogeneously branched) distribution polymerization processes (for example, U.S. Pat. No. 3,645,992 (Elston)), and are those in which the comonomer is randomly distributed within a given interpolymer molecule, and wherein substantially all of the interpolymer molecules have the same ethylene/comonomer ratio within that interpolymer. This is in contrast to heterogeneously branched interpolymers, typically produced by Ziegler-Natta type catalysts, and containing a non-homogeneous distribution of comonomer among the molecules of the interpolymer. The term "linear ethylene/α-olefin polymers" does not refer to high pressure branched polyethylene, which is known to those skilled in the art to have numerous long chain branches.

The substantially linear ethylene copolymers or interpolymers (also known as "SLEPs") are especially preferred. In addition, the various functionalized ethylene copolymers such as EVA (containing from 0.5 to 50 wt percent units derived from vinyl acetate) are also suitable.

"Substantially linear" means that a polymer has a backbone substituted with from 0.01 to 3 long-chain branches per 1000 carbons in the backbone, more preferably from 0.01 to 1 long chain branches per 1000 carbons, and especially from 0.05 to 1 long chain branches per 1000 carbons.

The substantially linear ethylene/α-olefin interpolymers of the present invention are described in U.S. Pat. No.

5,272,236 and in U.S. Pat. No. 5,278,272, Useful substantially linear ethylene/α-olefin interpolymers are those in which the comonomer is randomly distributed within a given interpolymer molecule, and wherein substantially all of the interpolymer molecules have the same ethylene/comonomer ratio within that interpolymer. The substantially linear ethylene/α-olefin interpolymers also have a single melting peak, as opposed to heterogeneously branched linear ethylene polymers, which have two or more melting peaks.

In one embodiment, the ethylene interpolymers have a uniform distribution of comomomer, such that the comonomer content of polymer fractions, across the molecular weight range of the interpolymer, vary by less than 10 weight percent, preferably less than 8 weight percent, more preferably less than 5 weight percent, and even more preferably less than 2 weight percent.

"Long-chain branching" or "LCB" means a chain length that exceeds that of the alpha-olefin component of the EAO polymer or EAO polymer blends. Although carbon-13 nuclear magnetic resonance (C-13 NMR), spectroscopy cannot distinguish or determine an actual number of carbon atoms in the chain, if the length is greater than six carbon atoms, the presence of LCB can be determined, or at least estimated, from molecular weight distribution of the EAO polymer(s). It can also be determined from a melt flow ratio or ratio (I10/I2) of melt index (I10) via ASTM D-1238 (190°C, 10 kg weight) to I2.

"Interpolymer" refers to a polymer having polymerized therein at least two monomers. It includes, for example, copolymers, terpolymers and tetrapolymers. It particularly includes a polymer prepared by polymerizing ethylene with at least one ethylenically unsaturated comonomer, typically an α-olefin of 3 to 20 carbon atoms (C3-C20). Illustrative aliphatic α-olefins include propylene, 1-butene, 1-hexene, 1-pentene, 4-methyl-1-pentene, 1-heptene, and 1-octene. Comonomers also include styrene and alkyl-substituted styrenes. The α-olefin is desirably an aliphatic C3-C10 α-olefin. Additional comonomers include polyenes, including, but not limited to, conjugated and non-conjugated dienes, and monomers containing three or more double bonds.

Preferred copolymers include EP, EB, ethylene/hexene-1 (EH) and EO polymers. Illustrative terpolymers include an ethylene/propylene/octene terpolymer as well as terpolymers of ethylene, a C3-C20 α-olefin and a diene such as norbornadiene, dicyclopentadiene, 1,4-hexadiene, piperylene or 5-ethylidene-2-norbornene.

"Elastomeric", as used herein, means an EAO polymer or EAO polymer blend that has a density that is beneficially less than 0.920 g/cc, desirably less than 0.900 g/cc, preferably less than 0.895 g/cc, more preferably less than 0.880 g/cc, still more preferably less than 0.875 g/cc, even more preferably less than 0.870 g/cc, and a percent crystallinity of less than 33 percent, preferably less than 29 percent and more preferably less than 23 percent. The density is preferably greater than 0.850 g/cc. Percent crystallinity is determined by differential scanning calorimetry (DSC).

SLEPs are characterized by narrow molecular weight distribution (MWD) and narrow short chain branching distribution (SCBD), and may be prepared as described in United States Patents 5,272,236 and 5,278,272. The SLEPs exhibit outstanding physical properties by virtue of their narrow MWD and narrow SCBD, coupled with long chain branching (LCB).

U.S. Patent 5,272,236 (column 5, line 67 through column 6, line 28) describes SLEP production via a continuous controlled polymerization process using at least one reactor, but allows for multiple reactors, at a polymerization temperature and pressure sufficient to produce a SLEP having desired properties. Polymerization preferably occurs via a solution polymerization process at a temperature of from 20°C to 250°C, using constrained geometry catalyst technology. Suitable constrained geometry catalysts are disclosed at column 6, line 29 through column 13, line 50 of USP 5,272,236.

A preferred SLEP has a number of distinct characteristics, one of which is an ethylene content that is between 20 and 90 wt percent, more preferably between 30 and 89 wt percent, with the balance comprising one or more comonomers. The ethylene and comonomer contents are based on SLEP weight, and are selected to attain a total monomer content of 100 wt percent. For chain lengths up to six carbon atoms, SLEP comonomer content can be measured using C-13 NMR spectroscopy.

SLEPs that meet the aforementioned criteria include, for example, Engage® polyolefin elastomers from The Dow Chemical Company, and other polymers produced via constrained geometry catalysis from The Dow Chemical Company and DuPont Dow Elastomers L.L.C.

The polypropylene polymers (also referred to as "PP polymers" or "PP") suitable for this invention are homopolymers of propylene; copolymers of propylene with a comonomer, such as ethylene, 1-butene, 1-hexene or 4-methyl-1-pentene, another α-olefin or a blend of a homopolymer and a copolymer. Each of the homopolymer, the copolymer or the blend of a homopolymer and a copolymer may be nucleated. The comonomer is preferably ethylene. The copolymer may be a random copolymer or a block copolymer, or a blend of a random copolymer and a block copolymer. As such, this component is preferably selected from the group consisting of polypropylene (PP) homopolymers and propylene/ethylene copolymers.

As used herein, "nucleated" refers to a polymer that has been modified by addition of a nucleating agent such as Millad™, a dibenzyl sorbitol commercially available from Milliken. Other conventional nucleating agents, such as sodium benzoate or other salts may also be used.

Preparation of polypropylene (PP) also involves the use of Ziegler catalysts, such as a titanium trichloride in combination with aluminum diethylmonochloride, as described by Cecchin, U.S. Patent 4,177,160. Polymerization processes used to produce PP include the slurry process, which is run at 50-90°C and 0.5-1.5 MPa (5-15 atm), and both the gas-phase and liquid-monomer processes, in which extra care must be given to the removal of amorphous polymer. Ethylene may be added to the reaction to form a polypropylene with ethylene blocks. PP resins may also be prepared by using any of a variety of metallocene, single site and constrained geometry catalysts, together with their associated processes.

The high melt strength material comprises a first polymer that is selected from the group consisting of an elastomeric EAO polymer and a PP polymer. The high melt strength material is characterized by a dynamic complex viscosity greater than, or equal to, 175,000 Poise (17,500 Pa·s), measured at 1- radians per second and 190 degrees Centigrade, with parallel plate rheometry. Polymers having a high molecular weight and long chain branching are likely to have the necessary high melt strength.

Dynamic complex viscosity ($\eta^*$) is measured by parallel plate rheometry. The rheometer inputs an oscillation to the drive plate, and measures load and phase angle between the input and output on the second plate. The phase angle of the response is utilized to deconvolute the complex viscosity, $\eta^*$, into the viscosity component that is exactly in phase with the input, $\eta'$ and the viscosity component that lags the input by 90 degrees, $\eta''$. The complex viscosity, $\eta^*$, squared, equals $\eta'$ squared plus $\eta''$ squared. The complex viscosity at 1 radian per second correlates very well with the viscosity measured by capillary rheometry at a strain rate of 1 reciprocal second. The $\eta'$ corresponds to the elastic response of the system. The $\eta''$ corresponds to the viscous response of the system. The ratio of $\eta''$ to $\eta'$ is equal to tan delta. The oscillation rate is varied from 0.1 to 100 radians per second to examine how the viscosity responds to shear rate. Samples were analyzed using "The Advanced Rheometrics Expansion Systems (ARES)" rheometer sold by TA Instruments.

Dynamic complex viscosity and melt index or $I_2$ (measured in accordance with ASTM D-1238 (190°C/2.16 kg weight)) do not directly correlate. Polymers having the same melt index can have different dynamic complex viscosities. With this in mind, EAO polymers having a dynamic complex viscosity suitable for the high melt strength material of the invention, generally have a melt index or $I_2$ less than 0.5 dg/min, in most instances have a melt index or $I_2$ less than 0.3 dg/min, more preferably less than 0.2 dg/min, and in many instances have a melt index, or $I_2$, that is so low as to be practically immeasurable.

Likewise, dynamic complex viscosity and melt flow rate (measured in accordance with ASTM D-1238 (230°C/2.16 kg weight)) do not directly correlate. Polymers having the same melt flow rate can have different dynamic complex viscosities. With this in mind, PP polymers having a dynamic complex viscosity suitable for the high melt strength material of the invention, generally have a melt flow rate (MFR) less than 0.4 dg/min, preferably less than 0.3 dg/min or less than 0.2 dg/min.

In one embodiment, an EAO polymer used in the high melt strength material has a melt index (I2) from 0.001 dg/min to 0.4 dg/min, preferably from 0.005 dg/min to 0.3 dg/min, and more preferably from 0.01 dg/min to 0.2 dg/min, as determined using ASTM D-1238 (190°C, 2.16 kg load). All individual values and subranges from 0.001 dg/min to 0.4 dg/min are included herein and disclosed herein. An EAO polymer with a melt index of 0.5 dg/min, or more, has insufficient melt strength to be used in combination with the high flow materials, as described herein.

In another embodiment, an EAO polymer used in the high melt strength material has a density from 0.83 g/cc to 0.93 g/cc, and preferably from 0.84 g/cc to 0.92 g/cc, and more preferably from 0.85 g/cc to 0.91 g/cc. All individual values and subranges from 0.83 g/cc to 0.93 g/cc are included herein and disclosed herein.

In another embodiment, an EAO polymer used in the high melt strength material has a viscosity ratio, $V_{0.1}/V_{100}$, from 3 to 40, and preferably from 4 to 35, and more preferably from 5 to 30. All individual values and subranges from 3 to 40 are included herein and disclosed herein.

In another embodiment, an EAO polymer used in the high melt strength material has comonomer incorporation in the final polymer less than 40 weight percent, preferably less than 30 weight percent, based on the total weight of polymerizable monomers. The amount of comonomer incorporation may be less than 20 weight percent, and can even be less than 10 or 5 weight percent, based on the total weight of polymerizable monomers.

In another embodiment, a PP polymer used in the high melt strength material has a melt flow rate (MFR) from 0.001 dg/min to 0.4 dg/min, preferably from 0.005 dg/min to 0.3 dg/min, and more preferably from 0.01 dg/min to 0.2 dg/min, as determined using ASTM D-1238 (230°C, 2.16 kg load). All individual values and subranges from 0.001 dg/min to 0.4 dg/min are included herein and disclosed herein.

In another embodiment, a PP polymer used in the high melt strength material has a density from 0.83 g/cc to 0.94 g/cc, and preferably from 0.84 g/cc to 0.93 g/cc, and more preferably from 0.85 g/cc to 0.93 g/cc. All individual values and subranges from 0.83 g/cc to 0.94 g/cc are included herein and disclosed herein.

In another embodiment, a PP polymer used in the high melt strength material has a viscosity ratio, $V_{0.1}/V_{100}$, from 3 to 50, and preferably from 4 to 45, and more preferably from 5 to 40. All individual values and subranges from 3 to 50 are included herein and disclosed herein.

The high flow material comprises a second polymer that is selected from the group consisting of an elastomeric ethylene/α-olefin polymer and a polypropylene polymer. The high flow material is characterized by a ratio of $\eta^*/td$ of less than 2500, where $\eta^*$ is the dynamic complex viscosity and td is the tan delta, both measured at 1 radian per second at 190 degrees Centigrade, as described above.

As with the dynamic complex viscosity alone, the ratio of the "dynamic complex viscosity to tan delta ($\eta^*/td$)" and melt index or I2 (measured in accordance with ASTM D-1238 (190°C/2.16 kg weight)) do not directly correlate. Polymers having the same melt index can have different $\eta^*/td$ ratios. With this in mind, EAO polymers having a $\eta^*/td$ ratio suitable for the high flow material of the invention, generally have a melt index or I2 of 15 dg/min or more, and in most instances have a melt index or I2 of 18 dg/min or more, and even more preferably have an I2 of 20 dg/min or more, or 25 dg/min or more.

Likewise, the $\eta^*/td$ ratio and melt flow rate (measured in accordance with ASTM D-1238 (230°C/2.16 kg weight)) do not directly correlate. Polymers having the same melt flow rate can have different $\eta^*/td$ ratios. With this in mind, PP polymers having a $\eta^*/td$ ratio suitable for the high flow material of the invention, generally have a melt flow rate of 25 dg/min or more, more preferably have a melt flow rate of 30 dg/min or more, or 40 dg/min or more.

In one embodiment, an EAO polymer used in the high flow material has a melt index (I2) from 15 dg/min to 1000 dg/min, preferably from 20 dg/min to 500 dg/min, and more preferably from 30 dg/min to 300 dg/min, and even more preferably from 40 to 200 dg/min, as determined using ASTM D-1238 (190°C, 2.16 kg load). All individual values and subranges from 15 dg/min to 1000 dg/min are included herein and disclosed herein.

In another embodiment, an EAO polymer used in the high flow material has a density from 0.83 g/cc to 0.92 g/cc, and preferably from 0.84 g/cc to 0.91 g/cc, and more preferably from 0.85 g/cc to 0.90 g/cc. All individual values and subranges from 0.83 g/cc to 0.92 g/cc are included herein and disclosed herein.

In another embodiment, an EAO polymer used in the high flow material has a viscosity ratio, $V_{0.1}/V_{100}$, from 1 to 20, and preferably from 1 to 15, and more preferably from 1 to 10. All individual values and subranges from 1 to 20 are included herein and disclosed herein.

In another embodiment, an EAO polymer used in the high flow material has a comonomer incorporation in the final polymer greater than 5 weight percent, preferably greater than 10 weight percent, based on the total weight of polymerizable monomers. The amount of comonomer incorporation can be greater than 15 weight percent, and can even be greater than 20 or 25 weight percent, based on the total weight of polymerizable monomers.

In another embodiment, a PP polymer used in the high flow material has a melt flow rate (MFR) from 25 dg/min to 1000 dg/min, preferably from 30 dg/min to 500 dg/min, and more preferably from 40 dg/min to 400 dg/min, as determined using ASTM D-1238 (230°C, 2.16 kg load). All individual values and subranges from 25 dg/min to 1000 dg/min are included herein and disclosed herein.

In another embodiment, a PP polymer used in the high flow material has a density from 0.82 g/cc to 0.92 g/cc, and preferably from 0.81 g/cc to 0.91 g/cc, and more preferably from 0.80 g/cc to 0.90 g/cc. All individual values and subranges from 0.82 g/cc to 0.92 g/cc are included herein and disclosed herein.

In another embodiment, a PP polymer used in the high flow material has viscosity ratio, $V_{0.1}/V_{100}$, from 1 to 20, and preferably from 1 to 15, and more preferably from 2 to 10. All individual values and subranges from 1 to 20 are included herein and disclosed herein.

Compositions of the invention comprising EAO polymers and PP polymers, regardless of which is the high strength material and which is the high flow material, preferably comprise at least 30 wt percent EAO polymers and at least 30 wt percent PP polymers. For roofing ply applications, the composition preferably comprises at least 60 wt percent EAO polymers.

In one embodiment, the compositions of the invention have a melt index (I2) or melt flow rate (MFR) from 0.01 dg/min to 100 dg/min, preferably from 0.1 dg/min to 50 dg/min, and more preferably from 1 dg/min to 40 dg/min, as determined using the respective ASTM D-1238 procedure. All individual values and subranges from 0.01 dg/min to 100 dg/min are included herein and disclosed herein.

In another embodiment, the compositions have a percent crystallinity of less than, or equal to, 50 percent, preferably less than, or equal to, 40 percent, and more preferably less than, or equal to, 30 percent, as measured by DSC. Preferably, these compositions have a percent crystallinity from 2 percent to 50 percent, including all individual values and subranges from 2 percent to 50 percent. Such individual values and subranges are included herein and disclosed herein.

In another embodiment, the compositions have a density from 0.83 g/cc to 0.93 g/cc, and preferably from 0.84 g/cc to 0.92 g/cc, and more preferably from 0.85 g/cc to 0.91 g/cc. All individual values and subranges from 0.83 g/cc to 0.93 g/cc are included herein and disclosed herein.

The composition of Claim 1, wherein the first polymer has a melt index, I2 (ASTM D-1238, 190 °C/2.16kg), or melt flow rate, MFR (ASTM D-1238, 230°C/2.16kg), less than 0.4 dg/min; and wherein the second polymer has a melt index, I2 (ASTM D-1238,: 190°C/2.16kg) , or melt flow rate, MFR (ASTM D-1238, 230°C/2.16kg.), greater than, or equal to, 25 dg/min.

The composition of Claim 1, wherein the first polymer has a melt index I2 (ASTM D-1238, 190 °C/2.16kg) , or melt flow rate, MFR (ASTM D-1238, 230°C/2.16kg) ; less than 0.3 dg/min; and wherein the second polymer has a melt index, I2 (ASTM D-1238, 190°C/2.16kg), or melt flow rate, MFR (ASTM D-1238, 230°C/2.16kg), greater than, or equal to, 30 dg/min.

Suitable compositions may contain 20 weight percent, or more, of the high melt strength material, preferably 30 weight percent or more, and more preferably 40 weight percent or more, or even more preferably, 50 weight percent or more, or 55 weight percent or more, of this material. In a further embodiment, the polymer composition contains 60 weight percent or less, of the high flow material, and more preferably 50 weight percent, or less or 45 weight percent or less, of this material. In another embodiment, the polymer composition contains from 50 to 90 weight percent, preferably from 55 to 80 weight percent, and more preferably from 60 to 75 weight percent of the high melt strength material. In a further embodiment, the polymer composition contains from 15 to 50 weight percent, preferably from 20 to 45 weight percent, and even more preferably from 25 to 40 weight percent of the high flow material. All weight percentages are based on the sum amount of the two materials.

In a preferred embodiment of the invention, the compositions do not contain a crosslinking or vulcanizing agent, such as a peroxide, phenols, azides, aldehyde-amine reaction products, substituted ureas, substituted guanidines; substituted xanthates; substituted dithiocarbamates; sulfur- containing compounds, such as thiazoles, imidazoles, sulfenamides, thiuramidisulfides, elemental sulfur, paraquinonedioxime, dibenzoparaquinonedioxime; or combinations thereof. In another embodiment, the composition does not contain a peroxide.

Necking, as defined herein, is the loss in sheet width that takes place in the distance between the die and the nip, when hot extrudate from a sheet die is drawn into the nip of a pair of take-up rolls, at a velocity equal to, or greater than, the velocity of the extrudate leaving the lips of the die. The reduction in width due to necking that is tolerable will depend upon the desired width of the sheet and the size of the extrusion die. For example, in a high speed extrusion line, equipped with dies that are only 11 inches wider than the target width of the sheet to be produced, the necking that results from the thinnest sheet made on the line, must be less than 9 inches to allow for normal process variation.

While not being bound by any particular theory, Applicant hypothesizes that there are two factors involved in necking. The first is the drawing of the polymer, as it stretches in response to gravity and the take-up forces. The second is a melt elasticity effect that results in narrow sheets for high melt strength materials, when such materials are tested at high rates of extrusion but relatively low take-up rates. This is a "memory effect" due to the high rate of extrusion. The polymer is going from a circular cross-section with half inch diameter to a rectangular cross-section with 24 inch width. There is not sufficient time in the die for stress relief to occur, and the polymer retracts when it exits the die. The retraction is seen in reduced width and lower apparent velocity.

Applicant has found that combining a high melt strength component with a high flow component, particularly one shown by parallel plate rheometry to have a high tan delta and therefore very low elasticity, will allow stress relief to occur even at high production rates. The tan delta is easily determined by parallel plate rheometry as the ratio of the viscous modulus to the elastic modulus. More conventional capillary rheometry that is used to determine the melt index of ethylene/alpha-olefins and the MFR of polypropylenes, only measures the complex viscosity, it is incapable of determining whether the viscosity is due to viscous or elastic causes.

A high speed extrusion process will be illustrated with reference to the following embodiment, but is not limited to this embodiment. A two inch diameter Killion single screw extruder was positioned such that the distance from the die lips to the nip of the take-up rolls was equivalent to 16 inches. The extruder was run at its maximum RPM of 150 to achieve maximum volume output. The extruder was coupled to a coat-hanger extrusion die that is 24 inches wide and has flexible adjustable lips. The lips of the extruder were adjusted as carefully as possible to constant separation of 0.033 inches or 33 mils (thousandths of an inch). The die exit therefore had a cross-sectional area of 0.792 square inches. Average output from the extruder was determined experimentally to be 53.5 cubic inches per hour. Since the flow through the die is equal to the velocity times the cross-sectional area, the velocity at the die lips was calculated as 5.63 feet per minute. The take-up rolls were part of the conventional vertical 3-roll stack. The gap between the two take-up rolls was adjusted to 20 mils spacing, the actual target thickness of an individual TPO layer in a 45 mil thick single ply roofing construction. The top roll of the pair was pressed against the stops by hydraulic pistons at both ends of the roll. This top roll 'floated' on the sheet, as long as the sheet was thicker than the preset gap, and the pressure created by the polymer going through the stack was greater than the pressure in the pistons. The pressure on the pistons was limited to 650 pounds per square inch to allow the roll to float and to avoid creating a large rolling bank. Because it was observed that most formulations had forward velocities less than 5.63 feet per minute, the take up speed for the 3-roll stack was adjusted to 5 feet per minute.

Sheet was produced after equilibration at these conditions (150 rpm, 5 feet per minute), and then the take-up speed was increased to 10 feet per minute. The line was equilibrated and then take-up speed was increased again to 15 feet per minute. After equilibrating again, the take-up speed was increased to 20 feet per minute. The width and average thickness of the sheets produced at each take-up speed were measured. Since the width and thickness generally follow a power law relationship, as shown below, it is possible to determine from the gathered data the coefficient or constant, "s," experimentally, and to calculate the width, when the thickness is equal to 20 mils. The relationship is as

follows:

$$Wj/Wi = [Hj/Hi]^s ,$$

*where W is the width of a sheet and H is the height or thickness of the sheet.*

Applicant found that formulations with poor resistance to necking lost more than seven inches of width, even at rates as low as five feet per minute. Because matter was not being destroyed, those sheets had the same cross-sectional area and therefore were thicker. Increasing take-up speed eventually brought these sheets to 20 mil thickness, but only at take-up rates in excess of 20 feet per minute, that resulted in necking of more than 14 inches.

In contrast, necking resistant formulations of the invention lost less than three inches to necking at five feet per minute. In keeping with-the rules of conservation of matter, these sheets were correspondingly thinner to retain the same cross-sectional area. Because the value of "s" was lower, these sheets lost thickness much faster than width, allowing some to reach 20 mil thickness at take-up rates just over ten feet a minute.

The compositions of the invention are useful for making sheets and membranes via high speed extrusion. These sheets and membranes can be used to make a variety of articles including, but not limited to, liners, pond liners, and single-ply and multiply-ply roofing membranes.

For any application in which the sheets will be heat-sealed, particularly roofing membrane applications, random PP copolymers are preferred as the PP polymer in the composition of the invention, because of their lower peak melt temperatures. A conventional homo-polymer polypropylene melts at between 160°C and 165°C depending on its atactic polypropylene content. For random copolymers, the melting temperature decreases with increasing ethylene comonomer content, and usually is between 140°C and 145°C. Impact copolymers may also be used as a high melt strength PP polymer in the invention. These materials incorporate the ethylene comonomer as an ethylene propylene rubber, dispersed within the homo-polymer polypropylene, as a discrete phase. For this reason they are commonly referred to as hetero-phasic copolymers or interpolymers. These impact copolymers have similar flexural modulus to the random copolymers.

Other high speed processes in which excessive melt elasticity would result in a loss in performance would be foam extrusion. It is known in the art that formulations must have enough melt strength to form stable bubbles once the foam leaves the die and has an opportunity to expand. Insufficient melt strength and the bubble break, relieving the internal pressure. However, if the material has too much melt elasticity, the bubbles will not grow to full size and will actually cause retraction of the foam as it cools but before the polymer can crystallize. By provide high melt strength; but allowing the residual stress to decay, it is projected that compositions of this invention would allow the preparation of lower density (larger bubbles) foams with less retraction or built in stress during cooling.

Any numerical range recited herein, include all values from the lower value to the upper value, in increments of one unit, provided that there is a separation of at least two units between any lower value and any higher value. As an example, if it is stated that the amount of a component, or a value of a compositional or physical property, such as, for example, amount of a blend component, softening temperature, melt index, is between 1 and 100, it is intended that all individual values, such as, 1, 2, 3, and all subranges, such as, 1 to 20, 55 to 70, 197 to 100, are expressly enumerated in this specification. For values which are less than one, one unit is considered to be 0.0001, 0.001, 0.01 or 0.1, as appropriate. For single digit values less than 10, one unit is typically "0.1." These are only examples of what is specifically intended, and all possible combinations of numerical values between the lowest value and the highest value enumerated, are to be considered to be expressly stated in this application. Numerical ranges have been recited, as discussed herein, in reference to melt index, melt flow rate, density, percent crystallinity, weight percent of a component, number of carbon atoms in a comonomer, and other properties.

The term "film,'' as used herein, means a single or multi-layered film structure.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The terms "blend" or "polymer blend," as used herein, mean a blend of two or more polymers. Such a blend may or may not be miscible. Such a blend may or may not be phase separated. Such a blend may or may not contain one or more domain configurations, as determined from transmission electron microscopy.

The terms "EAO" or "ethylene/α-olefin," as used herein, refer to an ethylene-based interpolymer that contains at least 50 mole percent ethylene, and one or more additional comonomers.

The terms "PP" or "polypropylene polymer," as used herein, refer to a polypropylene homopolymer, a propylene-based interpolymer, or a hetero-phasic propylene-based interpolymers. The propylene-based interpolymer contains at least 50 mole percent propylene, and one or more additional comonomers.

The compositions and processes of the invention, and their uses, are more fully described by the following examples, which are provided for the purpose of illustrating the invention, and are not to be construed as limiting the scope of the invention.

EXAMPLES

Unless stated otherwise in the specific example or table: Dynamic complex viscosity ($\eta^*$) is measured by parallel plate rheometry. The rheometer inputs an oscillation to the drive plate and measures load and phase angle between the input and output on the second plate. The phase angle of the response is utilized to deconvolute the complex viscosity, $\eta^*$, into the viscosity component that is exactly in phase with the input, $\eta'$, and the viscosity component that lags the input by 90 degrees, $\eta''$. The complex viscosity, $\eta^*$, squared, equals $\eta'$ squared plus $\eta''$ squared. The complex viscosity at 1 radian per second correlates very well with the viscosity measured by capillary rheometry at a strain rate of 1 reciprocal second. The in-phase component, $\eta'$, corresponds to the elastic response of the system. The out-of-phase component, $\eta''$, corresponds to the viscous response of the system. The ratio of $\eta''$ to $\eta'$ is equal to tan delta.

Melt Index ("MI") is an indication of molecular weight of a polymer. Melt index is inversely proportional to the molecular weight of the polymer. Thus, the higher the molecular weight, the lower the melt index, although the relationship is not linear. The MI for the EAOs in the Examples was measured according to ASTM D-1238, Condition 190C/2.16 kg (formerly known as "Condition (E)" and also known as I2). The MI is reported in units of dg/min (which is equivalent to g/10 min.) A Melt Index of < 0.5 indicates the melt index was significantly less than 0.5, so as to be undetectable.

Melt Flow Rate ("MFR") also is an indication of molecular weight of a polymer. It is inversely proportional to the molecular weight of the polymer. Thus, the higher the molecular weight, the lower the melt flow rate, although the relationship is not linear. The Melt Flow Rate for the polypropylenes in the Examples was measured or reported by the manufacturer as having been measured according to ASTM D-1238, Condition 230C/2.16 kg (formerly known as "Condition (L)," and also known as 12). The MFR is reported in units of dg/min (which is equivalent to g/10 min.)

Mooney Viscosity is Mooney Viscosity ML 1+4 @ 125°C, measured according to ASTM D-1646.

The density of the ethylene homopolymers and interpolymers, and other polyolefins is measured in accordance with ASTM D-792. Some samples are annealed at ambient conditions for 24 hours before the measurement is taken. (ASTM D-792 can also be used to measure density of other polymers as noted in this test procedure.

Differential Scanning Calorimetry (DSC) can be used to measure crystallinity in polyethylene (PE) based samples and polypropylene (PP) based samples. A sample was pressed into a thin film at a temperature of 190°C. About 5 to 8 mg of film sample was weighed and placed in a DSC pan. The lid was crimped on the pan to ensure a closed atmosphere. The sample pan was placed in a DSC cell, and then heated, at a rate of approximately 10°C/min, to a temperature of 180°C for PE (230°C for PP). The sample was kept at this temperature for three minutes. Then the sample was cooled at a rate of 10°C/min to -60°C for PE (-40°C for PP), and kept isothermally at that temperature for three minutes. The sample was next heated at a rate of 10°C/min until complete melting (second heat). The percent crystallinity was calculated by dividing the heat of fusion ($H_f$), determined from the second heat curve, by a theoretical heat of fusion of 292 J/g for PE (165 J/g, for PP), and multiplying this quantity by 100 (for example, percent cryst. = ($H_f$ / 292 J/g) x 100).

Interpolymer viscosity is conveniently measured in poise (dyne-second/square centimeter (d-sec/cm$^2$)), at shear rates within a range of 0.1-100 radian per second (rad/sec), and at 190°C, using a dynamic mechanical spectrometer, such as a RMS-800 or ARES from Rheometrics. The viscosities at 0.1 rad/sec and 100 rad/sec may be represented, respectively, as $V_{0.1}$ and $V_{100}$, with a ratio of the two referred to as RR, and expressed as $V_{0.1}/V_{100}$.

Experimental Extrusion Procedure

Although laboratory equipment is much smaller than the equipment on a production line, it is possible to reproduce the necking phenomenon. A single screw extruder was run at 150 rpm, its maximum speed. The distance between the die lips and the nip of the take-up rolls was set to 0.033 inches. The take-up speed was initially adjusted until it appeared to match the forward velocity of the extrudate as it came out of the die. This required an estimation of velocity, which could result in problems, if the estimate were too low. To prevent this, the procedure was modified to start at 5 feet per minute. The take-up speed was then increased in steps, until it was 4 times the initial take-up speed. When the desired take-up speed was reached, the sheet width and thickness were measured after the process reached equilibrium. This generally took about 5 minutes. The power law relationship between width and thickness at these conditions was used to define the width of a sheet at two target thicknesses, one of which was the thickness of a TPO ply, on either side of a scrim, at the upper end of the thickness range for single ply roofing, and the second of which represents the thickness of a TPO ply, on either side of a scrim, at the lower end of the thickness range for single ply roofing. The width of the sheet was subtracted from the width of the die to determine the amount of necking at each of the two target thicknesses.

The following EAO and polypropylene polymers, as shown in Table 1, were used in the Examples and Comparative Examples:

Table 1

| EAO | Comonomer | Wt% Ethylene | I2 (dg/min) | MFR (dg/min) | Density (g/cc) | RR* |
|---|---|---|---|---|---|---|
| EAO-1 | 1-octene | 61 | 0.5 | | 0.868 | 9.0 |
| EAO-2 | 1-butene | 87 | < 0.5 | | 0.905 | 25.0 |
| EAO-3 | 1-octene | 67 | < 0.5 | | 0.88 | 25.9 |
| EAO-4 | 1-octene | 62 | 2.0 | | 0.87 | 7.1 |
| EAO-5 | 1-butene | 77 | 2.0 | | 0.885 | 7.7 |
| EAO-6 | 1-octene | 67 | 18 | | 0.88 | 1.5 |
| EAO-7 | 1-octene | 67 | <0.5 | | 0.88 | 18.5 |
| EAO-8 | 1-butene | 70 | <0.5 | | 0.87 | 19.8 |
| EAO-9 | 1-octene | 78 | 30 | | 0.902 | 1.3 |
| PP-1 | | | | 2.0 | 0.902 | 14.5 |
| PP-2 | | | | 0.4 | - | 33.2 |
| PP-3 | | | | 1.5 | 0.90 | 16.9 |
| PP-4 | | | | 1.9 | 0.90 | 20.6 |
| PP-5 | | | | 10 | - | 6.0 |
| PP-6 | | | | 25 | 0.90 | 4.4 |
| PP-7 | | | | 35 | 0.90 | 2.7 |
| PP-8 | | | | 35 | 0.90 | 2.3 |
| PP-9 | | | | 0.45 | 0.902 | 30.0 |
| PP-10 | | | | 35 | 0.90 | 2.5 |
| * RR=$V_{0.1}/V_{100}$ | | | | | | |

Comparative Examples A-C

Comparative Example A is a composition from WO 98/32795 from which the rheology modifying peroxide has been omitted. The composition of Comparative Example A was a blend of EAO-1 and PP-1. The EAO-1 was an ethylene/1-octene copolymer having the properties shown in Table 1 and a density of 0.868 g/cc. The PP-1 was a nucleated random copolymer polypropylene having the properties shown in Table 2. As can be seen from the "Loss to Necking" reported in Table 2, the composition of Comparative Example A resulted in a sheet that had necked by more than 14 inches from the width of the die.

Table 2

| Example | Parts by Weight | Ingredients | Nominal Flow | TanDelta @ 1 rad/s | Visc in P @ 1 rad/s (Pa·s) | Visc/Tan Delta | Width @ 20 mil | Loss to Necking |
|---|---|---|---|---|---|---|---|---|
| Comp. Example A | 60 | EAO-1 | 0.5 MI | 2.60 | 125680 (12568.0) | 48410 | 9.7 | 14.3 |
| | 40 | PP-1 | 2.0 MFR | 2.06 | 91734 (9173.4) | 44551 | | |

(continued)

| Example | Parts by Weight | Ingredients | Nominal Flow | Tan Delta @ 1 rad/s | Visc in P @ 1 rad/s (Pa·s) | Visc/Tan Delta | Width @ 20 mil | Loss to Necking |
|---|---|---|---|---|---|---|---|---|
| Comp. Example B | 60 | EAO-1 | 0.5 MI | 2.60 | 125680 (12568.0) | 48410 | 12.4 | 11.6 |
| | 40 | PP-2 (HMS) | 0.4 .MFR | 1.31 | 262310 (26231.0) | 200638 | | |
| Comp. Example C | 60 | EAO-2 (HMS) | < 0.5 MI | 1.20 | 186020 (18602.0) | 154520 | 10.7 | 13.3 |
| | 40 | PP-1 | 2.0 MFR | 2.06 | 91734 (9173.4) | 44551 | | |
| P = Poise (1P = 0.1 Pa·s) | | | | | | | | |

To improve the poor resistance to necking exhibited in Comparative Example A, Comparative Examples B and C were prepared, replacing first the polypropylene copolymer, and then the EAO, with a higher melt strength alternative (that is, having a greater dynamic complex viscosity at 1 radian/second). The composition of Comparative Example B was a blend of EAO-1 and PP-2. The EAO-1 was the EAO of Comparative Example A. The PP-2 was a hetero-phasic polypropylene copolymer having the properties shown in Table 2. Comparative Example C was a blend of EAO-2 and PP-1. The EAO-2 was a 0.905 g/cc density ethylene/1-butene copolymer having a high degree of long chain branching, the properties shown in Table 2, and a Mooney viscosity of 25. The substitution of polymers having a higher melt strength helped somewhat, but the improvement of 1 to 2.7 inches in width is not sufficient to allow robust production. Some commercial extrusion processes utilize a die that is only 11 inches wider than the target sheet width. A "Loss to Necking" of 10 inches or more is unacceptable for such processes. The compositions of Comparative Examples A, B and C are inadequately resistant to necking, and result in sheet that is too narrow. Thus, increasing the high melt strength alone failed to impart sufficient necking resistance to the composition.

Examples 1-3 and Comparative Examples D-F

These examples demonstrate the effect of the high flow component on the necking resistance of the composition. All the compositions of Table 3 were prepared with EAO-2. Because of its molecular weight and degree of long chain branching as indicated by the dynamic complex viscosity, this EAO meets the definition of a high melt strength component of this invention.

Comparative Examples D-F were prepared with random copolymer polypropylenes that are commercially available with melt flow rates from 1 to 10. Comparative Example D was a blend of EAO-2 and PP-3, which was a random copolymer polypropylene having the properties shown in Table 3. Comparative Example E was a blend of EAO-2 and PP-4, which was a random copolymer polypropylene having the properties shown in Table 3. Comparative Example F was a blend of EAO-2 and PP-5, which was a random copolymer polypropylene having the properties shown in Table 3. Only the composition of Comparative Example F, which contains PP-5 having a dynamic complex viscosity/tan delta ratio of 5989 (and an MFR of 10), is beginning to show signs of improved, but still inadequate, width and necking resistance.

Table 3

| | Parts by Weight | Ingredients | Nominal Flow | Tan Delta @ 1 rad/s | Visc in P @ 1 rad/s (Pa·s) | Visc/ TanDelta | Width @ 20 mil | Loss to Necking |
|---|---|---|---|---|---|---|---|---|
| Comp. Ex. D | 60 | EAO-2 (HMS) | < 0.5 MI | 1.20 | 186020 (18602.0) | 154520 | 12.3 | 11.7 |
| | 40 | PP-3 | 1.5 MFR | 1.88 | 112250 (11225.0) | 59696 | | |

(continued)

| | Parts by Weight | Ingredients | Nominal Flow | Tan Delta @ 1 rad/s | Visc in P @ 1 rad/s (Pa·s) | Visc/ TanDelta | Width @ 20 mil | Loss to Necking |
|---|---|---|---|---|---|---|---|---|
| Comp. Ex. E | 60 | EAO-2 (HMS) | < 0.5 MI | 1.20 | 186020 (18602.0) | 154520 | 12.2 | 11.8 |
| | 40 | PP-4 | 1.9 MFR | 1.63 | 96423 (9642.3) | 59262 | | |
| Comp. Ex. F | 60 | EAO-2 (HMS) | < 0.5 MI | 1.20 | 186020 (18602.0) | 154520 | 13.4 | 10.6 |
| | 40 | PP-5 | 10 MFR | 3.83 | 22911 (2291.1) | 5989 | | |
| Ex. 1 | 60 | EAO-3 (HMS) | < 0.5 MI | 1.24 | 189030 (18903.0) | 152701 | 15.8 | 8.2 |
| | 40 | PP-6 (HF) | 25 MFR | 4.94 | 11924 (1192.4) | 2413 | | |
| Ex. 2 | 60 | EAO-2 (HMS) | < 0.5 MI | 1.20 | 186020 (18602.0) | 154520 | 15.3 | 8.7 |
| | 40 | PP-7 (HF) | 35 MFR | 11.15 | 8022 (802.2) | 719 | | |
| Ex. 3 | 60 | EAO-2 (HMS) | < 0.5 MI | 1.20 | 186020 (18602.0) | 154520 | 15.1 | 8.9 |
| | 40 | PP-8 (HF) | 35 MFR | 14.82 | 6911 (691.1) | 466 | | |

Examples 1-3 illustrate compositions of the invention which comprise a high flow polypropylene component in addition to a high melt strength EAO component. The high flow component is characterized by a "Dynamic Complex Viscosity/Tan Delta" ratio below 2500. Such high flow polypropylenes generally have a MFR of 25 or above. Example 1 was a blend of EAO-3 and PP-6. The EAO-3 was an ethylene/1-octene copolymer having a density of 0.88. PP-6 a random copolymer polypropylene having the properties shown in Table 3. Example 2 was a blend of EAO-2 and PP-7, which was a random copolymer polypropylene having the properties shown in Table 3. Example 3 was a blend of EAO-2 and PP-8, which was a random copolymer polypropylene having the properties shown in Table 3. The compositions of Examples 1-3 exhibited necking resistance, and yielded increased sheet widths that meet the demands of commercial sheet extrusion processes.

Example 4 and Comparative Examples G and H

The PP-2, a hetero-phasic polypropylene copolymer was utilized in the previously described Comparative Example 2. It has a MFR of 0.4. With a dynamic complex viscosity of 262,310 Poise (26,231.0 Pa·s), it is a high melt strength material of the invention. With a "dynamic complex viscosity/tan delta" ratio of 200,638, it is unacceptable as high flow material of the invention. The PP-9, a similar grade hetero-phasic polypropylene copolymer, was used in Comparative Examples G and H and in Example 4. PP-9 has the properties shown in Table 4.

The EAO was varied in Comparative Examples G and H and Example 4 to demonstrate the effect of increasing the EAO flow property in a composition with a high melt strength polypropylene. Comparative Example G was a blend of EAO-4 and PP-9. EAO-4 was an ethylene/1-octene copolymer with density of 0.87 g/cc, and a broadened molecular weight distribution, which improves flow as evidenced by the ratio of dynamic complex viscosity / tan delta in Table 4. Comparative Example H was a blend of EAO-5 and PP-9. EAO-5 was an ethylene/1-butene copolymer with a broadened molecular weight distribution similar to EAO-4, a density of 0.885 g/cc and Melt Index of 2.

When used with a high melt strength component, EAO-1, with a "dynamic complex viscosity/tan delta" ratio of 48,410 and MI of 0.5, had insufficient flow (see Comparative Example B) to formulate a composition with necking resistance. Necking was reduced in Comparative Examples G and H as the "dynamic complex viscosity/tan delta" ratio of the EAO decreased, and the MI of the EAO increased to 2. But, the "Loss to Necking" still remained unacceptably high.

Table 4

|  | Parts by Weight | Ingredients | Nominal Flow | Tan Delta @ 1 rad/s | Visc in P @ 1 rad/s (Pa·s) | Visc/Tan Delta | Width @ 20 mil | Loss to Necking |
|---|---|---|---|---|---|---|---|---|
| Comp. Ex. B | 60 | EAO-1 | 0.5 MI | 2.60 | 125680 (12568.0) | 48410 | 12.4 | 11.6 |
|  | 40 | PP-2 (HMS) | 0.4 MFR | 1.31 | 262310 (26231.0) | 200638 |  |  |
| Comp. Ex. G | 60 | EAO-4 | 2.0 MI | 2.74 | 41044 (4104.4) | 14980 | 13.7 | 10.3 |
|  | 40 | PP-9 (HMS) | 0.4 MFR | 1.38 | 239040 (23904.0) | 173205 |  |  |
| Comp. Ex. H | 60 | EAO-5 | 2.0 MI | 2.43 | 42024 (4202.4) | 17303 | 13.6 | 10.4 |
|  | 40 | PP-9 (HMS) | 0.4 MFR | 1.38 | 239040 (23904.0) | 173205 |  |  |
| Ex. 4 | 60 | EAO-6 (HF) | 18 MI | 41.16 | 4033 (403.3) | 98 | 16.5 | 7.5 |
|  | 40 | PP-9 (HMS) | 0.4 MFR | 1.38 | 239040 (23904.0) | 173205 |  |  |

The desired flow for the high flow component was achieved in Example 4 by blending EAO-6 with PP-9. The EAO-6 was a 0.88 g/cc density ethylene/1-octene copolymer having both a low dynamic complex viscosity and a high tan delta at 1 radians/sec and 190°C. The combination results in a ratio of "dynamic complex viscosity/tan delta" of less than 100. Example 4 results in a sheet that is 6 inches wider than Comparative Example A, 4 inches wider than Comparative Example B, and 3 inches wider than Comparative Examples G and H.

Examples 5-11

Examples 5-11 illustrate the invention. The compositions of Examples 5 and 6 contain EAO-7, which was an ethylene/1-octene copolymer having a density of 0.88 g/cc, a low to medium degree of long chain branching, and the properties shown in Table 5. The density of EAO-7 is the same as that for EAO-3 of Example 1. However, EAO-7 had a higher molecular weight and lower branching than EAO-3, which is reflected in the dynamic complex viscosity of EAO-7 being almost twice that of EAO-3. Examples 1 and 6, which contain the same polypropylene having a dynamic complex viscosity/tan delta ratio at the high end of the range for melt flow polymers, show that a greater width, and reduced "Loss to Necking" is achieved as dynamic complex viscosity of the high melt strength polymer increases. Examples 5 and 6, which contain the same EAO having a high dynamic complex viscosity, show that a greater width, and lower "Loss to Necking" is achieved as the "dynamic complex viscosity/tan delta" ratio of the high melt flow polymer decreases.

Table 5

|  | Parts by Weight | Ingredients | Nominal Flow | Tan Delta @ 1 rad/s | Visc. in P @ 1 rad/s (Pa·s) | Visc/Tan Delta | Width @ 20 mil | Loss to Necking |
|---|---|---|---|---|---|---|---|---|
| Ex. 5 | 60 | EAO-7 (HMS) | < 0.5 MI | 1.78 | 367940 (36794.0) | 207022 | 17.3 | 6.7 |
|  | 40 | PP-8 (HF) | 35 MFR | 14.82 | 6911 (691.1) | 466 |  |  |

(continued)

| | Parts by Weight | Ingredients | Nominal Flow | Tan Delta @ 1 rad/s | Visc. in P @ 1 rad/s (Pa·s) | Visc/Tan Delta | Width @ 20 mil | Loss to Necking |
|---|---|---|---|---|---|---|---|---|
| Ex. 6 | 60 | EAO-7 (HMS) | < 0.5 MI | 1.78 | 367940 (36794.0) | 207022 | 16.5 | 7.5 |
| | 40 | PP-6 (HF) | 25 MFR | 4.94 | 11924 (1192.4) | 2413 | | |
| Ex. 1 | 60 | EAO-3 (HMS) | < 0.5 MI | 1.24 | 189030 (18903.0) | 152701 | 15.8 | 8.3 |
| | 40 | PP-6 (HF) | 25 MFR | 4.94 | 11924 (1192.4) | 2413 | | |
| Ex. 7 | 60 | EAO-8 (HMS) | < 0.5 MI | 1.50 | 242010 (24201.0) | 161406 | 17.4 | 6.6 |
| | 40 | PP-8 (HF) | 35 MFR | 14.82 | 6911 (691.1) | 466 | | |
| Ex. 8 | 60 | EAO-8 (HMS) | < 0.5 MI | 1.50 | 242010 (24201.0) | 161406 | 17.0 | 7.0 |
| | 40 | PP-10 (HF) | 35 MFR | 12.42 | 6837 (683.7) | 551 | | |
| Ex. 9 | 60 | EAO-3 (HMS) | < 0.5 MI | 1.24 | 189030 (18903.0) | 152701 | 16.0 | 8.1 |
| | 40 | EAO-9 (HF) | 30 MI | 59.91 | 2259 (225.9) | 38 | | |
| Ex. 10 | 65 | EAO-2 (HMS) | < 0.5 MI | 1.20 | 186020 (18602.0) | 154520 | 15.8 | 8.2 |
| | 35 | PP-8 (HF) | 3 5 MFR | 14.82 | 6911 (691.1) | 466 | | |
| Ex. 11 | 70 | EAO-2 (HMS) | < 0.5 MI | 1.20 | 186020 (18602.0) | 154520 | 14.8 | 9.2 |
| | 30 | PP-8 (HF) | 35 MFR | 14.82 | 6911 (691.1) | 466 | | |

The compositions of Examples 7 and 8 contained EAO-8, a high molecular weight (48 Mooney) ethylene/1-butene copolymer with density of 0.87 grams per cubic centimeter. The high flow components for these two examples were PP-8 and PP-10 respectively, each of which is a 35 MFR random propylene copolymer. Because of the lower density and crystallinity of the majority component in Examples 7 and 8, these compositions ensure robust heat seaming in actual roofing applications.

The composition of Example 9 had ethylene alpha olefins for both the high melt strength and high flow component. Such a system had a much lower modulus than any of those containing polypropylene or ethylene propylene copolymer whether random copolymer or impact (hetero-phasic) copolymer.

The compositions of Examples 10 and 11 show the effect of decreasing the level of the high flow component. The equivalent example, at a 60:40 ratio, is Example 3 described previously.

**Claims**

1. A composition comprising:

a high melt strength material and a high flow material,
wherein the high melt strength material comprises a first polymer selected from an elastomeric ethylene/α-olefin polymer and a polypropylene polymer, wherein the first polymer has a melt index, 12 (ASTM D-1238, 190°C/2.16kg), or melt flow rate, MFR (ASTM D-1238, 230°C/2.16kg), less than 0.5 dg/min, and
wherein the high melt strength material has a dynamic complex viscosity greater than, or equal to, 175,000 Poise, measured using parallel plate rheometry at 1 radian per second and 190 degrees Centigrade, and
wherein the high flow material comprises a second polymer selected from an elastomeric ethylene/α-olefin polymer and a polypropylene polymer, wherein the second polymer has a melt index, I2 (ASTM D-1238, 190°C/2.16kg), or melt flow rate, MFR (ASTM D-1238, 230°C/2.16kg), greater than 20 dg/min, and
wherein the second polymer has a density in the range of from 0.83g/cc to 0.92g/cc when it is an elastomeric ethylene/α-olefin polymer and in the range of from 0.80g/cc to 0.92g/cc when it is a polypropylene polymer, and
wherein the high flow material has a ratio, η*/td, less than 2500, where η* is the dynamic complex viscosity and td is the tan delta, both measured at 1 radian per second at 190 degrees Centigrade, and
wherein the first polymer and the second polymer are not both a polypropylene polymer, and
wherein the high melt strength material is present in an amount greater than, or equal to, 20 weight percent, based on the sum weight of the high melt strength material and the high flow material.

2. The composition of Claim 1, wherein the high melt strength material and the high flow material each individually comprise an ethylene/α-olefin polymer.

3. The composition of Claim 2, wherein each ethylene/α-olefin polymer, individually, has polymerized therein at lease one α-olefin comonomer, and, optionally, a diene, and wherein the α-olefin contains from 3 to 20 carbon atoms.

4. The composition of Claim 3, wherein each α-olefin individually contains from 3 to 10 carbon atoms.

5. The composition of Claim 3, wherein each ethylene/α-olefin polymer is, individually, a diene-modified polymer, and wherein the diene is selected from norbonadiene, dicyclopentadiene, 1,4-hexadiene, piperylene, 5-ethylidene-2-norbornene and mixtures thereof.

6. The composition of Claim 1, wherein the high melt strength material is present in an amount greater than, or equal to, 50 weight percent, based on the sum weight of the high melt strength material and the high flow material.

7. The composition of Claim 1, wherein the high flow material is present in a an amount less than, or equal to, 50 weight percent, based on the sum weight of the high melt strength material and the high flow material.

8. The composition of Claim 6, wherein the high flow material is present in an amount less than, or equal to, 45 weight percent, based on the sum weight of the high melt strength material and the high flow material.

9. The composition of Claim 1, wherein the first polymer has a melt index, I2 (ASTM D-1238, 190°C/2.16kg), or melt flow rate, MFR (ASTM D-1238, 230°C/2.16kg), less than 0.4 dg/min.

10. The composition of Claim 1, wherein the second polymer has a melt index, I2 (ASTM D-1238, 190°C/2.16kg), or melt flow rate, MFR (ASTM D-1238, 230°C/2.16kg), greater than 25 dg/min.

11. The composition of Claim 1, wherein the second polymer has a density of from 0.84 g/cc to 0.91 g/cc.

12. The composition of Claim 1, wherein the first polymer has a melt index, I2 (ASTM D-1238, 190°C/2.16kg), or melt flow rate, MFR (ASTM D-1238, 230°C/2.16kg), less than 0.4 dg/min; and wherein the second polymer has a melt index, I2 (ASTM D-1238, 190°C/2.16kg), or melt flow rate, MFR (ASTM D-1238, 230°C/2.16kg), greater than, or equal to, 25 dg/min.

13. The composition of Claim 1, wherein the first polymer has a melt index I2 (ASTM D-1238, 190°C/2.16kg), or melt flow rate, MFR (ASTM D-1238, 230°C/2.16kg), less than 0.3 dg/min; and wherein the second polymer has a melt index, 12 (ASTM D-1238, 190°C/2.16kg), or melt flow rate, MFR (ASTM D-1238, 230°C/2.16kg), greater than, or equal to, 30 dg/min

14. The composition of Claim 1, wherein the composition does not contain a peroxide.

**15.** The composition of Claim 1, wherein the composition does not contain a vulcanizing agent.

**16.** A process for forming an elastomeric sheet at high speeds with minimal necking, said process comprising extruding the composition of Claim 1.

**17.** An elastomeric sheet formed from the composition of Claim 1.

**18.** A foam formed from the composition of Claim 1.

**19.** An article comprising at least one component formed from the composition of Claim 1.

**20.** An article comprising at least one component comprising the composition of Claim 1.


**Patentansprüche**

**1.** Zusammensetzung, die Folgendes umfasst:

ein Material mit hoher Schmelzfestigkeit und ein hochfließendes Material,
wobei das Material mit hoher Schmelzfestigkeit ein erstes Polymer umfasst, das aus einem elastomeren Ethylen/α-Olefin-Polymer und einem Polypropylenpolymer ausgewählt ist, wobei das erste Polymer einen Schmelzindex, 12 (ASTM D-1238, 190°C/2,16 kg), bzw. eine Schmelzflussgeschwindigkeit, MFR (ASTM D-1238, 230°C/2,16 kg), kleiner als 0,5 dg/min besitzt, und
wobei das Material mit hoher Schmelzfestigkeit eine komplexe dynamische Viskosität größer oder gleich 175.000 Poise besitzt, gemessen mittels Parallelplattenrheometrie mit 1 rad/sek bei 190°C, und
wobei das hochfließende Material ein zweites Polymer umfasst, das aus einem elastomeren Ethylen/α-Olefin-Polymer und einem Polypropylenpolymer ausgewählt ist, wobei das zweite Polymer einen Schmelzindex, 12 (ASTM D-1238, 190°C/2,16 kg), bzw. eine Schmelzflussgeschwindigkeit, MFR (ASTM D-1238, 230°C/2,16 kg), größer als 20 dg/min besitzt, und
wobei das zweite Polymer eine Dichte im Bereich von 0,83 $g/cm^3$ bis 0,92 $g/cm^3$ besitzt, wenn es ein elastomeres Ethylen/α-Olefin-Polymer ist, und im Bereich von 0,80 $g/cm^3$ bis 0,92 $g/cm^3$, wenn es ein Polypropylenpolymer ist, und
wobei das hochfließende Material ein Verhältnis η*/td kleiner als 2500 besitzt, wo η* die komplexe dynamische Viskosität und td der tan delta ist, beide gemessen mit 1 rad/sek bei 190°C, und
wobei das erste Polymer und das zweite Polymer nicht beide ein Polypropylenpolymer sind, und
wobei das Material mit hoher Schmelzfestigkeit in einer Menge von größer oder gleich 20 Gew.-% vorliegt, bezogen auf das Gesamtgewicht des Materials mit hoher Schmelzfestigkeit und des hochfließenden Materials.

**2.** Zusammensetzung nach Anspruch 1, wobei das Material mit hoher Schmelzfestigkeit und das hochfließende Material jeweils für sich ein Ethylen/α-Olefin-Polymer umfassen.

**3.** Zusammensetzung nach Anspruch 2, wobei in jedem einzelnen Ethylen/α-Olefin-Polymer mindestens ein α-Olefin-Comonomer und, optional, ein Dien polymerisiert ist, und wobei das α-Olefin von 3 bis 20 Kohlenstoffatome enthält.

**4.** Zusammensetzung nach Anspruch 3, wobei jedes einzelne α-Olefin von 3 bis 10 Kohlenstoffatome enthält.

**5.** Zusammensetzung nach Anspruch 3, wobei jedes einzelne Ethylen/α-Olefin-Polymer ein dienmodifiziertes Polymer ist, und wobei das Dien ausgewählt ist aus Norbornadien, Dicyclopentadien, 1,4-Hexadien, Piperylen, 5-Ethyliden-2-norbornen und Mischungen davon.

**6.** Zusammensetzung nach Anspruch 1, wobei das Material mit hoher Schmelzfestigkeit in einer Menge von größer oder gleich 50 Gew.-% vorliegt, bezogen auf das Gesamtgewicht des Materials mit hoher Schmelzfestigkeit und des hochfließenden Materials.

**7.** Zusammensetzung nach Anspruch 1, wobei das hochfließende Material in einer Menge von kleiner oder gleich 50 Gew.-% vorliegt, bezogen auf das Gesamtgewicht des Materials mit hoher Schmelzfestigkeit und des hochfließenden Materials.

**8.** Zusammensetzung nach Anspruch 6, wobei das hochfließende Material in einer Menge von kleiner oder gleich 45 Gew.-% vorliegt, bezogen auf das Gesamtgewicht des Materials mit hoher Schmelzfestigkeit und des hochfließenden Materials.

**9.** Zusammensetzung nach Anspruch 1, wobei das erste Polymer einen Schmelzindex, 12 (ASTM D-1238, 190°C/ 2,16 kg) bzw. eine Schmelzflussgeschwindigkeit, MFR (ASTM D-1238, 230°C/2,16 kg) kleiner als 0,4 dg/min besitzt.

**10.** Zusammensetzung nach Anspruch 1, wobei das zweite Polymer einen Schmelzindex, 12 (ASTM D-1238, 190°C/ 2,16 kg) bzw. eine Schmelzflussgeschwindigkeit, MFR (ASTM D-1238, 230°C/2,16 kg) größer als 25 dg/min besitzt.

**11.** Zusammensetzung nach Anspruch 1, wobei das zweite Polymer eine Dichte von 0,84 g/cm$^3$ bis 0,91 g/cm$^3$ besitzt.

**12.** Zusammensetzung nach Anspruch 1, wobei das erste Polymer einen Schmelzindex, 12 (ASTM D-1238, 190°C/ 2,16 kg) bzw. eine Schmelzflussgeschwindigkeit, MFR (ASTM D-1238, 230°C/2,16 kg) kleiner als 0,4 dg/min besitzt; und wobei das zweite Polymer einen Schmelzindex 12 (ASTM D-1238, 190°C/2,16 kg) bzw. eine Schmelzflussgeschwindigkeit, MFR (ASTM D-1238, 230°C/2,16 kg) größer oder gleich 25 dg/min besitzt.

**13.** Zusammensetzung nach Anspruch 1, wobei das erste Polymer einen Schmelzindex, 12 (ASTM D-1238, 190°C/ 2,16 kg) bzw. eine Schmelzflussgeschwindigkeit, MFR (ASTM D-1238, 230°C/2,16 kg) kleiner als 0,3 dg/min besitzt; und wobei das zweite Polymer einen Schmelzindex 12 (ASTM D-1238, 190°C/2,16 kg) bzw. eine Schmelzflussgeschwindigkeit, MFR (ASTM D-1238, 230°C/2,16 kg) größer oder gleich 30 dg/min besitzt.

**14.** Zusammensetzung nach Anspruch 1, wobei die Zusammensetzung kein Peroxid enthält.

**15.** Zusammensetzung nach Anspruch 1, wobei die Zusammensetzung kein Vulkanisiermittel enthält.

**16.** Verfahren zur Bildung einer elastomeren Folie mit hoher Geschwindigkeit bei minimaler Einschnürung, wobei das Verfahren das Extrudieren der Zusammensetzung nach Anspruch 1 umfasst.

**17.** Elastomere Folie aus der Zusammensetzung nach Anspruch 1.

**18.** Schaumstoff aus der Zusammensetzung nach Anspruch 1.

**19.** Gegenstand, der mindestens eine aus der Zusammensetzung nach Anspruch 1 hergestellte Komponente umfasst.

**20.** Gegenstand, der mindestens eine die Zusammensetzung nach Anspruch 1 umfassende Komponente umfasst.

**Revendications**

**1.** Composition comprenant un matériau à haute résistance à l'état fondu et un matériau à haut indice d'écoulement,

- dans laquelle le matériau à haute résistance à l'état fondu comprend un premier polymère choisi parmi un polymère élastomère d'éthylène et d'alpha-oléfine et un polymère de type polypropylène, lequel premier polymère présente un indice de fluidité à chaud 12 (ASTM D-1238, 190 °C, 2,16 kg) ou un indice d'écoulement MFR (ASTM D-1238, 230 °C, 2,16 kg) inférieur à 0,5 dg/min,
- dans laquelle le matériau à haute résistance à l'état fondu présente une viscosité dynamique complexe, mesurée par rhéométrie entre plateaux parallèles à 1 rd/s et 190 °C, supérieure ou égale à 175 000 poises,
- dans laquelle le matériau à haut indice d'écoulement comprend un deuxième polymère choisi parmi un polymère élastomère d'éthylène et d'alpha-oléfine et un polymère de type polypropylène, lequel deuxième polymère présente un indice de fluidité à chaud 12 (ASTM D-1238, 190 °C, 2,16 kg) ou un indice d'écoulement MFR (ASTM D-1238, 230 °C, 2,16 kg) supérieur à 20 dg/min,
- et lequel deuxième polymère présente une masse volumique de 0,83 à 0,92 g/cm$^3$ lorsqu'il s'agit d'un polymère élastomère d'éthylène et d'alpha-oléfine, mais de 0,80 à 0,92 g/cm$^3$ lorsqu'il s'agit d'un polymère de type polypropylène,
- dans laquelle le matériau à haut indice d'écoulement présente un rapport $\eta^*/tg\delta$ de la viscosité dynamique complexe $\eta^*$ à la tangente de l'angle de perte $\delta$, toutes deux mesurées à 1 rd/s et 190 °C, inférieur à 2500,
- dans laquelle le premier polymère et le deuxième polymère ne sont pas tous les deux un polymère de type polypropylène,
- et dans laquelle le matériau à haute résistance à l'état fondu se trouve en une quantité qui représente 20 % ou plus du poids total du matériau à haute résistance à l'état fondu et du matériau à haut indice d'écoulement.

2. Composition conforme à la revendication 1, dans laquelle le matériau à haute résistance à l'état fondu et le matériau à haut indice d'écoulement comprennent chacun, individuellement, un polymère d'éthylène et d'alpha-oléfine.

3. Composition conforme à la revendication 2, dans laquelle chaque polymère d'éthylène et d'alpha-oléfine, considéré individuellement, comporte à l'état polymérisé au moins un comonomère de type alpha-oléfine, et un diène en option, laquelle alpha-oléfine comporte de 3 à 20 atomes de carbone.

4. Composition conforme à la revendication 3, dans laquelle chaque alpha-oléfine, considérée individuellement, comporte de 3 à 10 atomes de carbone.

5. Composition conforme à la revendication 3, dans laquelle chaque polymère d'éthylène et d'alpha-oléfine, considéré individuellement, est un polymère modifié avec un diène, lequel diène est choisi parmi les norbornadiène, dicyclopentadiène, 1,4-hexadiène, pipérylène et 5-éthylidène-2-norbornène et leurs mélanges.

6. Composition conforme à la revendication 1, dans laquelle le matériau à haute résistance à l'état fondu se trouve en une quantité qui représente 50 % ou plus du poids total du matériau à haute résistance à l'état fondu et du matériau à haut indice d'écoulement.

7. Composition conforme à la revendication 1, dans laquelle le matériau à haut indice d'écoulement se trouve en une quantité qui représente 50 % ou moins du poids total du matériau à haute résistance à l'état fondu et du matériau à haut indice d'écoulement.

8. Composition conforme à la revendication 6, dans laquelle le matériau à haut indice d'écoulement se trouve en une quantité qui représente 45 % ou moins du poids total du matériau à haute résistance à l'état fondu et du matériau à haut indice d'écoulement.

9. Composition conforme à la revendication 1, dans laquelle le premier polymère présente un indice de fluidité à chaud I2 (ASTM D-1238, 190 °C, 2,16 kg) ou un indice d'écoulement MFR (ASTM D-1238, 230 °C, 2,16 kg) inférieur à 0,4 dg/min.

10. Composition conforme à la revendication 1, dans laquelle le deuxième polymère présente un indice de fluidité à chaud I2 (ASTM D-1238, 190 °C, 2,16 kg) ou un indice d'écoulement MFR (ASTM D-1238, 230 °C, 2,16 kg) supérieur à 25 dg/min.

11. Composition conforme à la revendication 1, dans laquelle le deuxième polymère présente une masse volumique de 0,84 à 0,91 g/cm$^3$.

12. Composition conforme à la revendication 1, dans laquelle le premier polymère présente un indice de fluidité à chaud I2 (ASTM D-1238, 190 °C, 2,16 kg) ou un indice d'écoulement MFR (ASTM D-1238, 230 °C, 2,16 kg) inférieur à 0,4 dg/min, et le deuxième polymère présente un indice de fluidité à chaud I2 (ASTM D-1238, 190 °C, 2,16 kg) ou un indice d'écoulement MFR (ASTM D-1238, 230 °C, 2,16 kg) supérieur ou égal à 25 dg/min.

13. Composition conforme à la revendication 1, dans laquelle le premier polymère présente un indice de fluidité à chaud I2 (ASTM D-1238, 190 °C, 2,16 kg) ou un indice d'écoulement MFR (ASTM D-1238, 230 °C, 2,16 kg) inférieur à 0,3 dg/min, et le deuxième polymère présente un indice de fluidité à chaud I2 (ASTM D-1238, 190 °C, 2,16 kg) ou un indice d'écoulement MFR (ASTM D-1238, 230 °C, 2,16 kg) supérieur ou égal à 30 dg/min.

14. Composition conforme à la revendication 1, laquelle composition ne contient pas de peroxyde.

15. Composition conforme à la revendication 1, laquelle composition ne contient pas d'agent de vulcanisation.

16. Procédé permettant de former une feuille d'élastomère à des vitesses élevées et avec un étranglement minimal, lequel procédé comprend l'extrusion d'une composition conforme à la revendication 1.

**17.** Feuille d'élastomère formée à partir d'une composition conforme à la revendication 1.

**18.** Mousse formée à partir d'une composition conforme à la revendication 1.

**19.** Article comprenant au moins un composant formé à partir d'une composition conforme à la revendication 1.

**20.** Article comprenant au moins un composant comprenant une composition conforme à la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62840504 P
- WO 9832795 A
- US 5688866 A
- US 5856406 A
- EP 1072643 A1
- US 5576374 A
- US 5358792 A
- US 6207754 B
- WO 03033585 A1

- US 20010036975 A
- US 20020042472 A
- WO 9616119 A
- US 6096831 A
- US 3645992 A, Elston
- US 5272236 A
- US 5278272 A
- US P5272236 A
- US 4177160 A, Cecchin